# EUROPEAN PATENT SPECIFICATION

(11) **EP 3 286 888 B1**
(45) Date of publication and mention of the grant of the patent: **20.11.2024**
(21) Application number: 15718870.7
(22) Date of filing: 24.04.2015
(51) Int. Cl.: H04L 9/40, H04W 12/128, H04W 12/30

(54) **MITIGATION OF MALICIOUS SOFTWARE IN A MOBILE COMMUNICATIONS NETWORK**
ABSCHWÄCHUNG VON BÖSARTIGER SOFTWARE IN EINEM MOBILKOMMUNIKATIONSNETZWERK
LUTTE CONTRE UN LOGICIEL MALVEILLANT DANS UN RÉSEAU DE COMMUNICATION MOBILE

(43) Date of publication of application: 28.02.2018
(73) Proprietor: Nokia Solutions and Networks Oy, 02610 Espoo (FI)
(72) Inventor: LUEKEN, Joachim, 80686 München (DE); SCHMIDT, Ernst-Dieter, 83052 Bruckmühl (DE)
(74) Representative: Novagraaf Technologies
(86) International application number: PCT/EP2015/058955
(87) International publication number: WO 2016/169623

(56) References cited:
- WO-A1-2012/162102
- US-A1- 2008 086 773
- US-A1- 2010 162 399
- US-A1- 2012 233 694
- US-A1- 2013 227 691

## Description

### Field

The present invention relates to mitigation of malicious software in a mobile communications network. More specifically, the present invention relates to measures (including methods, apparatuses and computer program products) for realizing mitigation of malicious software in a mobile communications network.

### Background

Mobile data transmission and data services are constantly making progress. With the increasing penetration of such services, the number of user equipment (UE) devices is also increasing. This increasing number of UE devices ("UEs") forms the target of malicious software ("malware") spreading though the internet.

Besides possibly causing costs for the user/owner of an infected UE, malicious software may also influence the mobile communication network serving an infected UE in, for example, attacking network services or exhausting network bandwidth.

The present invention will herein below be explained with reference to 3^{rd} Generation Partnership Project (3GPP) Long Term Evolution (LTE) as one example of a mobile communications network. Though, principles set out herein below are applicable to other scenarios of mobile communications networks, too. Typically, a mobile communications network consists of an access network establishing the physical transport of data (payload (user) data and control data) and a core network establishing the control functionality for the entire network and the interoperability of the network with other networks, e.g. via gateways. References to specific network entities or nodes and their names are intended as mere example only.

Other network node names may apply in different scenarios while still accomplishing the same functionality. Also, the same functionality may be moved to another network entity. Therefore, the principles as taught herein below are not to be understood as being limited to the specific scenario referred to for explanation purposes.

A system known as Mobile Guard (MG) supports network based traffic pattern analysis for detecting UEs infected with malicious software. MG is an immediate and device independent malicious software monitoring and detection system. MG supports notification of subscribers (i.e. users/owners of a UE) via short messaging service (SMS) about malware infections as a mitigation action.

The notification SMS as a mitigation action from the MG system informing subscribers about malware infections may contain a hyperlink to a support web page where further instructions for remediation actions can be found. However, subscribers may hesitate to follow the link in the SMS since the SMS cannot be authenticated and users are aware that clicking on a link in a SMS may cause installation of malware on the device, or may lead to a phishing web site.

Hence, the problem arises that although UEs infected with malicious software may be detected in a mobile communications network and the corresponding subscriber may be notified of such circumstance, it can not be ensured that the infected UE continues influencing/disturbing operation of the mobile communications network.

Hence, there is a need to provide for mitigation of malicious software in a mobile communications network.

US 2012/233694 A1 discloses that when a malware defense component has identified an application or binary related to a traffic profile, the malware defense component can remove, delete, or otherwise erase the application or binary from a mobile device. WO 2012/162102 A1 discloses a malware analysis system that includes receiving a potential malware sample from a firewall; analyzing the potential malware sample using a virtual machine to determine if the potential malware sample is malware; and automatically generating a signature. US 2010/162399 discloses collecting xFlow data associated with a network, analyzing the collected xFlow data to detect anomalous traffic on the network, investigating the presence of malware on the network in response to detecting anomalous traffic on the network, and taking remedial action to eradicate and/or isolate malware detected on the network. US 2008/086773 A1 discloses a network management system that monitors malware within a mobile network and comprises a receiver component that obtains data regarding malware in the mobile network. The data is obtained from a first source and a second source, where the first source is of a different type than the second source. The monitoring system also includes an analysis component that generates a malware analysis of the mobile network as a function of the data.

US2013/227691A1 relates to a method for detecting malicious network content on portable data storage devices and remote network server.

### Summary

Various example embodiments of the present invention aim at addressing at least part of the above issues and/or problems and drawbacks.

Various aspects of example embodiments of the present invention are set out in the appended claims.

According to an example aspect of the present invention, there is provided a method according to claim 1.

According to an example aspect of the present invention, there is provided an apparatus according to claim 5.

According to an example aspect of the present invention, there is provided a computer program product comprising computer-executable computer program code which, when the program is run on a computer (e.g. a computer of an apparatus according to any one of the aforementioned apparatus-related exemplary aspects of the present invention), is configured to cause the computer to carry out the method according to any one of the aforementioned method-related exemplary aspects of the present invention.

Such computer program product may comprise (or be embodied) a (tangible) computer-readable (storage) medium or the like on which the computer-executable computer program code is stored, and/or the program may be directly loadable into an internal memory of the computer or a processor thereof.

Any one of the above aspects enables an efficient protection of the mobile communications network from influence/disturbance by UEs infected with malicious software to thereby solve at least part of the problems and drawbacks identified in relation to the prior art.

By way of example embodiments of the present invention, there is provided mitigation of malicious software in a mobile communications network. More specifically, by way of example embodiments of the present invention, there are provided measures and mechanisms for realizing mitigation of malicious software in a mobile communications network.

Thus, improvement is achieved by methods, apparatuses and computer program products enabling/realizing mitigation of malicious software in a mobile communications network.

### Brief description of the drawings

In the following, the present invention will be described in greater detail by way of non-limiting examples with reference to the accompanying drawings, in which
Figure 1 is a block diagram illustrating an apparatus according to example embodiments of the present invention,
Figure 2 is a block diagram illustrating an apparatus according to example embodiments of the present invention,
Figure 3 is a block diagram illustrating an apparatus according to example embodiments of the present invention,
Figure 4 is a schematic diagram of a method according to example embodiments of the present invention,
Figure 5 is a schematic diagram of a method according to example embodiments of the present invention,
Figure 6 is a schematic diagram of a method according to example embodiments of the present invention,
Figure 7 shows a schematic diagram of general control plane and user plane structures according to example embodiments of the present invention,
Figure 8 shows a schematic diagram of an example of a system environment illustrating interfaces and signaling variants according to example embodiments of the present invention,
Figure 9 is a block diagram alternatively illustrating apparatuses according to example embodiments of the present invention, and
Figure 10 is a block diagram alternatively illustrating an apparatus according to example embodiments of the present invention.

### Detailed description of drawings and embodiments of the present invention

The present invention is described herein with reference to particular non-limiting examples and to what are presently considered to be conceivable embodiments of the present invention. A person skilled in the art will appreciate that the invention is by no means limited to these examples, and may be more broadly applied.

It is to be noted that the following description of the present invention and its embodiments mainly refers to specifications being used as non-limiting examples for certain example network configurations and deployments. Namely, the present invention and its embodiments are mainly described in relation to 3GPP specifications being used as non-limiting examples for certain example network configurations and deployments. As such, the description of example embodiments given herein specifically refers to terminology which is directly related thereto. Such terminology is only used in the context of the presented non-limiting examples, and does naturally not limit the invention in any way. Rather, any other communication or communication related system deployment, etc. may also be utilized as long as compliant with the features described herein.

Hereinafter, various embodiments and implementations of the present invention and its aspects or embodiments are described using several variants and/or alternatives. It is generally noted that, according to certain needs and constraints, all of the described variants and/or alternatives may be provided alone or in any conceivable combination (also including combinations of individual features of the various variants and/or alternatives).

According to example embodiments of the present invention, in general terms, there are provided measures and mechanisms for (enabling/realizing) mitigation of malicious software in a mobile communications network.

An upcoming technology in relation to operation/management of communications networks is named Software Defined Networking (SDN). SDN supports a convergence of information technology (IT) and telecommunication. SDN allows cloud and virtualization technology - originally used in data centers - to be applied e.g. in the evolved packet core (EPC) of LTE mobile networks. The mentioned convergence now allows new concepts.

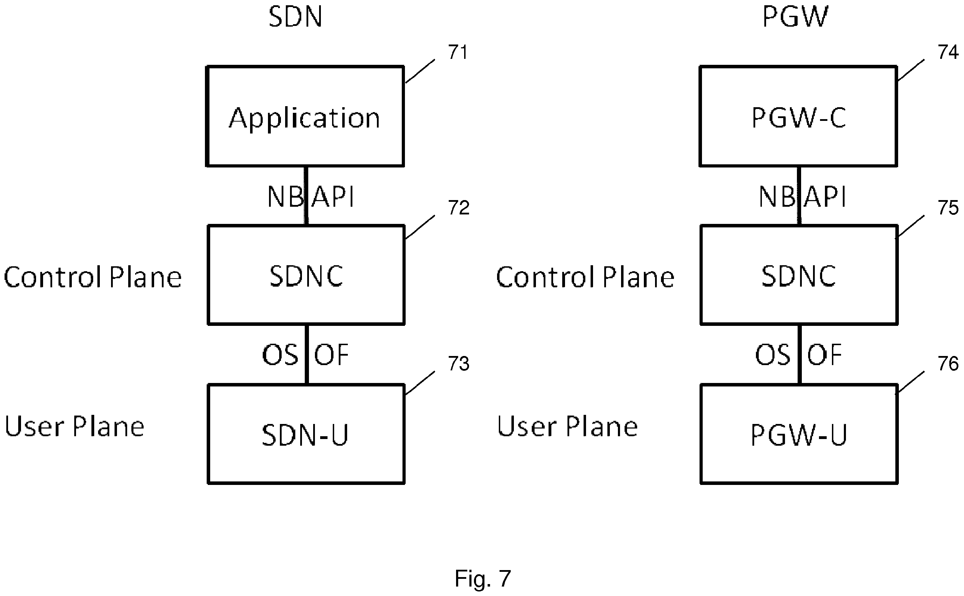

Figure 7 shows a schematic diagram of general control plane and user plane structures. In particular, Figure 7 allows summarized explanation of SDN alone and in combination with a packet data network gateway (PDN-GW, PGW) of a mobile communications network.

As is derivable from Figure 7, in SDN there is a split between the control plane and the forwarding plane (user plane). In Figure 7, the SDN controller (SDNC) 72 controls the user plane traffic in SDN-U 73. In addition, there might be an application 71 which gives via a northbound interface i.e. application programming interface (API) information to the controller 72 how and when to configure the user plane. As a southbound interface from the controller towards the SDN-U 73 an open source (OS) interface like e.g. OpenFlow (OF) may be used.

Mapping this to the 3GPP PGW there is a split in PGW-C 74, SDNC 75 and PGW-U 76. In the PGW application (PGW-C 74) the 3GPP control protocol e.g. the Gx interface to the policy and charging rules function (PCRF) is handled. The control part (SDNC 75) gets information from the application to control the user plane traffic in PGW-U 76. Especially the GTP traffic termination and user traffic connection to the internet may be configured here. Here, also traffic can be disconnected or forced to a pre-configured internet protocol (IP) address. This may be done by programming tables with the pre-configured IP-addresses.

Using SDN in relation to mitigation involving the mentioned MG, according to example embodiments of the present invention, mitigation actions in case of malware infected UE can be provided.

According to example embodiments of the present invention, several mitigation actions are provided.

Namely, according to example embodiments of the present invention, a notification SMS can be sent to the infected device. Such notification SMS may be sent to the subscriber in order to warn about the malware infection. However, a notification SMS generated by the MG system on behalf of the mobile network operator (MNO) to the infected UE may not be trusted by the recipient because basically a SMS cannot be authenticated. Therefore the recipient may not be willing to follow the instructions given in the SMS.

Further, according to example embodiments of the present invention, an isolation of the infected device can be effected. Depending on the type and severity of the malware infection, the MNO may want to isolate the infected device in order to prevent that the malware continues to e.g. attack network services, exhaust network bandwidth, etc.

Furthermore, according to example embodiments of the present invention, redirection of the infected device to a malware support web page can be effected. Namely, it is useful to automatically redirect the infected device to a support web page where instructions can be received on how to remove the malware from the device, etc.

In addition, according to example embodiments of the present invention, malicious destinations can be blocked. Malicious destinations such as command and control servers and drop zones for upload of stolen device data can be blocked, thereby preventing that malware receives configuration instructions from bot net herders or that sensitive data is uploaded to the attacker.

In particular, example embodiments of the present invention provide the above listed mitigation actions and thus a mitigation of malicious software through an interworking of the MG system with technology provided by SDN applied in core components of a mobile communications network.

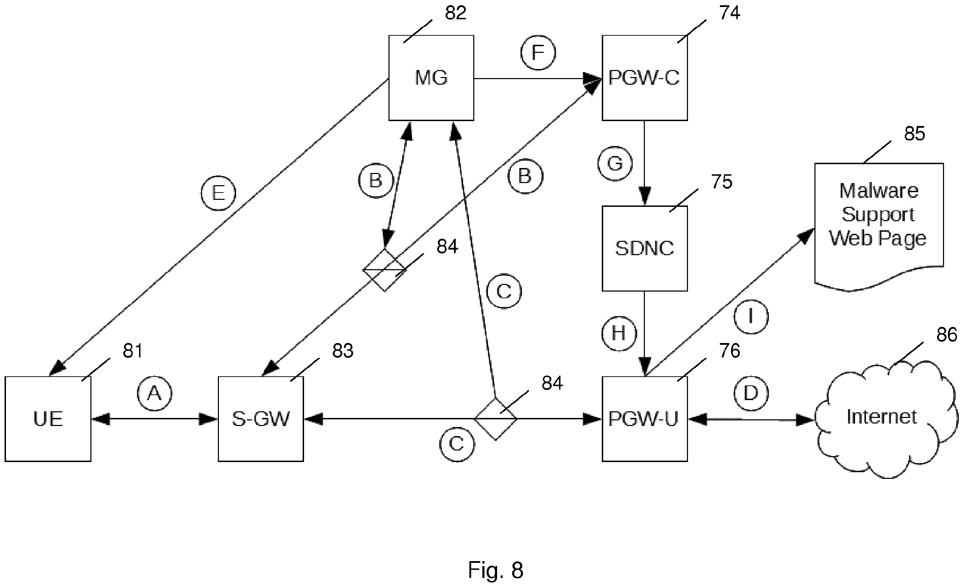

Figure 8 shows a schematic diagram of an example of a system environment illustrating interfaces and signaling variants according to example embodiments of the present invention.

In particular, Figure 8 illustrates the provision of mitigation of malicious software through an interworking of the MG system with technology provided by SDN in a network scenario with a serving gateway (S-GW) and a PGW.

As is shown in Figure 8, according to example embodiments of the present invention, the MG system 82 is able to detect anomalies caused by malicious software on UEs 81 immediately by monitoring different mobile core network interfaces such as the Gn (for 3G networks) and S5 (for LTE networks) interfaces, or SMS interfaces. In other words, the analysis, i.e. the detection, can be effected within the network operators domain.

As an example according to Figure 8, the MG 82 receives a copy of the S5 interface denoted as interfaces (B) and (C) in the above drawing via any form of splitting or listening entity 84. The S5 interface may tunnel UE traffic received from the radio interface (A) to the internet interface (D). It is noted that the system environment illustrated in Figure 8 uses an LTE mobile network scenario for explanation reasons only. Similar configurations are also possible within 3G networks using serving general packet radio service (GPRS) support node (SGSN) and gateway GPRS support node (GGSN) instead of S-GW 83 and PGW, or within comparable network scenarios.

According to example embodiments of the present invention, mitigation actions can be initiated immediately in order to avoid, for example, cash being transferred outside the existing value chain, e.g. by stopping P-SMS charges being transferred, and informing the subscriber or business partner.

If malicious software traffic has been detected on interface (C) by the MG 82, as a first mitigation action, according to example embodiments of the present invention the MG system 82 may send a notification SMS via interface (E) to the subscriber to warn about the infection.

Since such SMS cannot be authenticated by the recipient, there may be no hyperlink or similar in the message. The warning may simply notify the subscriber of the infection.

An example notification text may read "Dear Customer, your operator has detected potential malware on your device. Your device has been isolated from the network and all traffic will be redirected to the malware support web page. Please open your browser application to retrieve further information for remediation." It is self-evident that the notification text is not limited to this example.

According to further example embodiments of the present invention, in parallel to sending the SMS (or instead of), the MG system 82 sends instructions to the PGW-C 74 via interface (F). Such instructions initiates the above mentioned isolation, redirection, and/or blocking. In this regard, it is noted that, according to example embodiments of the present invention, the MG 82 is able to detect a type of the malicious software. Thus, the resulting action or actions from the actions listed above may depend on the specific detected malicious software.

In detail, according to example embodiments, the PGW-C 74 informs the SDNC 75 to program and configure the PGW-U 76 according to these instructions. As a result, the SDNC 75 according to example embodiments may isolate the infected device and/or redirect all traffic via interface (I) to a malware support web page 85, such that the connection of/for the infected device stays inside the mentioned "walled garden", i.e., within the network operators domain.

In doing so, the UE 81 is isolated and cannot access the internet anymore except the MNO's malware support web page 85.

In doing so, according to example embodiments, an authentication mechanism for SMS is not required, since the isolation and redirection of the device 81 can only be authorized by the MNO, and therefore the user might trust the information received in the SMS as well as the content provided on the malware support web page.

According to example embodiments of the present invention, the malware support web page may instruct the user on how to proceed to disinfect the infected UE, e.g. to download a malicious software removal tool (removal software). Only after successful removal of the malicious software the SDN (i.e. the MG) will reconfigure the user session to again allow internet access. As mentioned above, according to example embodiments of the present invention, the MG 82 is able to detect a type of the malicious software. Consequently, when redirecting the traffic of the infected UE to a specific server hosting a malicious software support web page, the specific server (address) to which the traffic of the infected UE is redirected may depend on the specific detected malicious software. Alternatively, the server may host a couple of support web pages which are tailored to specific types of malicious software, i.e. each providing solutions for a specific (type of) malicious software. In such case, the specific server (address) to which the traffic of the infected UE is redirected may be the same, but the headed support web page may depend on the specific detected malicious software.

In addition, according to still further example embodiments of the present invention, if the MG system 82 is confident that the destination address, that was accessed by the UE 81 and which initially caused the generation of the detection event in the MG 82, is malicious, then the MG 82 may instruct the SDN controller 75 to block this destination address in order to prevent that in future this destination address is being contacted by any UE of the MNO. According to example embodiments of the present invention, in order to achieve such blocking, the PGW-U 76 is programmed by the SDNC 75 accordingly. As a consequence, requests by users to connect to certain IP addresses will be dropped.

In doing so, according to example embodiments of the present invention, it is in general prevented that other UEs are being attacked by this malicious site.

According to example embodiments of the present invention, the proposed interworking between the MG 82 and the PGWC 74 relies on a new interface (F) as shown in Figure 8. This interface (F) carries the commands from the MG 82 to the PGWC 74 in order to aid in supporting mitigation actions in case of malicious software infected UEs.

In more concrete terms, the commands proposed according to example embodiments of the present invention are
- to isolate the infected device:
   Such command instructs the PGWC 74 to block internet access for the affected user session. The user session may be addressed by parameters such as IMEI, TEID and GGSN address, or similar (device related) identifier.
- to redirect device traffic to a specified address:
   Such command instructs the PGWC 74 to redirect traffic for the affected user session to the specified address. The user session may be addressed by parameters such as IMEI, TEID and GGSN address, or similar (device related) identifier.
- to block a specified destination address:
   Such command instructs the PGWC 74 to block traffic from all users (all UEs) to the specified destination address.

By referring to the (device related) identifier, the aimed isolation/redirection also works in case an IP address of the mobile device (i.e. UE) changes over time. Namely, even if the user (its UE) disconnects an old session an establishes a new one, the new session can again be isolated/redirected via a newly allocated end user IP address which is linked to the (device related) identifier (e.g. IMEI, TEID and GGSN address) via e.g. a packet data protocol (PDP) context linking the (device related) identifier with the allocated user end IP address.

Once the infected device is isolated and redirected, solutions for disinfecting the device can be provided, which, according to example embodiments of the present invention may be tailored to the specific detected malicious software.

Namely, the solution may be specific removal software which is exactly adapted to the detected malicious software.

As a further option, specific commands may be generated from a server in the mentioned "walled garden" towards the infected device. Accordingly, it is possible to emulate command and control servers in the mentioned "walled garden" and to send arbitrary instructions to the malicious software. Such arbitrary instructions generated from such server may be such that the instructions lead to e.g. a self-destruction of the malicious software or to any modification of the malicious software which at least reduces maleficence of the software.

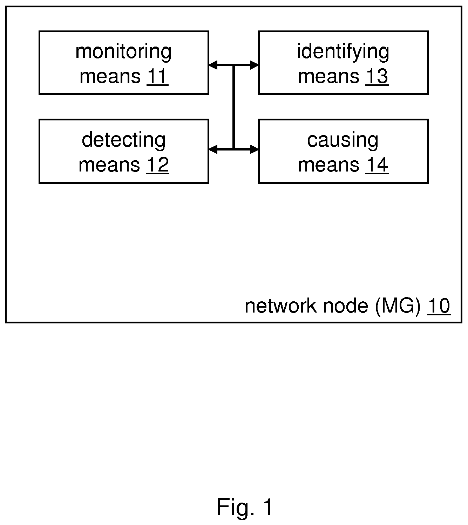

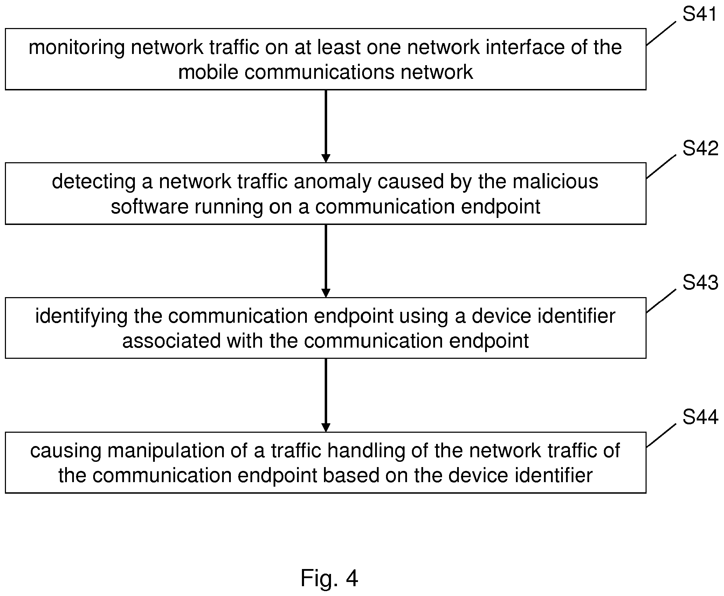

Figure 1 is a block diagram illustrating an apparatus according to example embodiments of the present invention. The apparatus may be a network node 10 such as a Mobile Guard (MG), i.e. a structure providing MG functionality, including monitoring means 11, detecting means 12, identifying means 13, and causing means 14. The monitoring means 11 monitors network traffic on at least one network interface of the mobile communications network. The detecting means 12 detects a network traffic anomaly caused by the malicious software running on a communication endpoint. The identifying means 13 identifies the communication endpoint using a device identifier associated with the communication endpoint. The causing means 14 causes manipulation of a traffic handling of the network traffic of the communication endpoint based on the device identifier. The caused manipulation of the traffic handling of the network traffic of the communication endpoint may be based on both the device identifier and a detected malware. Figure 4 is a schematic diagram of a method according to example embodiments of the present invention. The apparatus according to Figure 1 may perform the method of Figure 4 but is not limited to this method. The method of Figure 4 may be performed by the apparatus of Figure 1 but is not limited to being performed by this apparatus.

As shown in Figure 4, a method according to example embodiments of the present invention includes an operation of monitoring (S41) network traffic on at least one network interface of the mobile communications network, an operation of detecting (S42) a network traffic anomaly caused by the malicious software running on a communication endpoint, an operation of identifying (S43) the communication endpoint using a device identifier associated with the communication endpoint, and an operation of causing (S44) manipulation of a traffic handling of the network traffic of the communication endpoint based on the device identifier. The caused manipulation of the traffic handling of the network traffic of the communication endpoint may be based on both the device identifier and a detected malware.

According to a variation of the method shown in Figure 4, example details of the causing operation (S44) are given, which are inherently independent from each other as such.

Such example causing operation (S44) according to example embodiments of the present invention may include an operation of transmitting an instruction message instructing manipulation of the traffic handling of the network traffic of the communication endpoint.

According to further example embodiments of the present invention, the instruction message includes an instruction to suppress the network traffic of the communication endpoint to a communications network different from the mobile communications network.

According to further example embodiments of the present invention, the instruction message includes an instruction to redirect the network traffic of the communication endpoint to a predetermined network address.

According to further example embodiments of the present invention, the predetermined network address identifies a web server hosting a malicious software support web page.

According to still further example embodiments of the present invention, the predetermined network address identifies a web server providing malicious software removal software. Such removal software may be generic, i.e., suitable for a couple of types of malicious software, or may be respectively tailored to a specific (type of) malicious software. According to still further example embodiments of the present invention, the predetermined network address identifies a web server providing malicious software dependent solutions ("recipes") for remediation of the infection. Such malicious software dependent solution ("recipe") may include information about the threats that are associated with the respective malicious software.

According to a variation of the method shown in Figure 4, example details of the detecting operation (S42) are given, which are inherently independent from each other as such.

Such example detecting operation (S42) according to example embodiments of the present invention may include an operation of determining a type of the malicious software running on the communication endpoint. According to such variation, the causing (S44) is based on the type of the malicious software running on the communication endpoint.

According to a variation of the method shown in Figure 4, example additional operations are given, which are inherently independent from each other as such. According to such variation, an example method according to example embodiments of the present invention may include an operation of ascertaining a network address in a communications network different from the mobile communications network, the network address being associated with the malicious software running on the communication endpoint, and an operation of transmitting an instruction to suppress any network traffic of any communication endpoint in the mobile communications network to the ascertained network address.

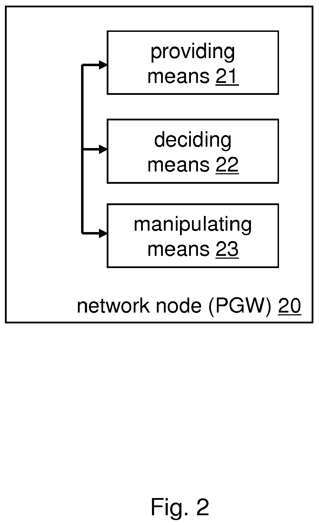

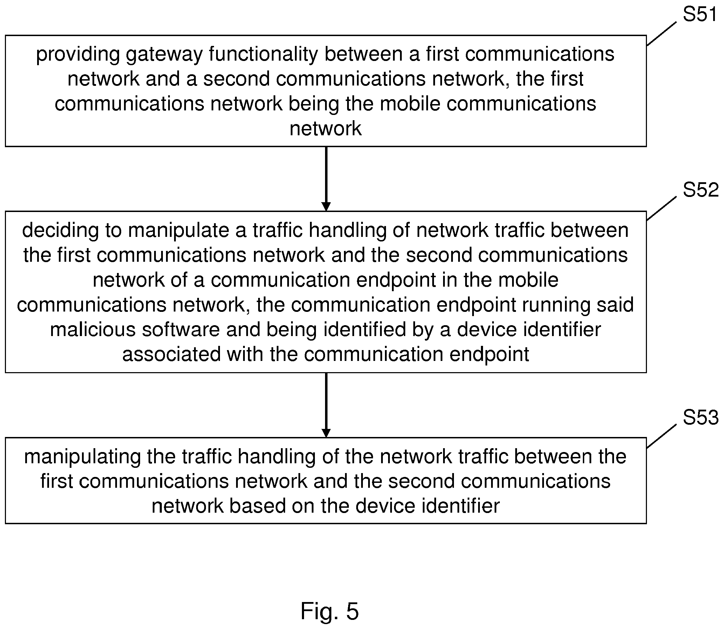

Further, Figure 2 is a block diagram illustrating an apparatus according to example embodiments of the present invention. The apparatus may be a network node 20 such as a packet data network gateway (PGW), including providing means 21, deciding means 22, and manipulating means 23. The providing means 21 provides gateway functionality between a first communications network and a second communications network, the first communications network being the mobile communications network. The deciding means 22 decides to manipulate a traffic handling of network traffic between the first communications network and the second communications network of a communication endpoint in the mobile communications network, the communication endpoint running said malicious software and being identified by a device identifier associated with the communication endpoint. The manipulating means 23 manipulates the traffic handling of the network traffic between the first communications network and the second communications network based on the device identifier. Figure 5 is a schematic diagram of a method according to example embodiments of the present invention. The apparatus according to Figure 2 may perform the method of Figure 5 but is not limited to this method. The method of Figure 5 may be performed by the apparatus of Figure 2 but is not limited to being performed by this apparatus.

As shown in Figure 5, a method according to example embodiments of the present invention includes an operation of providing (S51) gateway functionality between a first communications network and a second communications network, the first communications network being the mobile communications network, an operation of deciding (S52) to manipulate a traffic handling of network traffic between the first communications network and the second communications network of a communication endpoint in the mobile communications network, the communication endpoint running said malicious software and being identified by a device identifier associated with the communication endpoint, and an operation of manipulating (S53) the traffic handling of the network traffic between the first communications network and the second communications network based on the device identifier.

According to a variation of the method shown in Figure 5, example details of the deciding operation (S52) are given, which are inherently independent from each other as such.

Such example deciding operation (S52) according to example embodiments of the present invention may include an operation of receiving an instruction message instructing manipulation of the traffic handling of the network traffic of the communication endpoint.

According to further example embodiments of the present invention, the instruction message includes an instruction to suppress the network traffic of the communication endpoint to the second communications network.

According to further example embodiments of the present invention, the instruction message includes an instruction to redirect the network traffic of the communication endpoint to a predetermined network address.

According to further example embodiments of the present invention, the predetermined network address identifies a web server hosting a malicious software support web page.

According to still further example embodiments of the present invention, the predetermined network address identifies a web server providing malicious software removal software. Such removal software may be generic, i.e., suitable for a couple of types of malicious software, or may be respectively tailored to a specific (type of) malicious software. According to still further example embodiments of the present invention, the predetermined network address identifies a web server providing malicious software dependent solutions ("recipes") for remediation of the infection. Such malicious software dependent solution ("recipe") may include information about the threats that are associated with the respective malicious software.

According to a variation of the method shown in Figure 5, example additional operations are given, which are inherently independent from each other as such. According to such variation, an example method according to example embodiments of the present invention may include an operation of receiving an instruction to suppress any network traffic of any communication endpoint in the mobile communications network to a certain network address in the second communications network, the network address being associated with the malicious software running on the communication endpoint, and an operation of suppressing any network traffic of any communication endpoint in the mobile communications network to the certain network address.

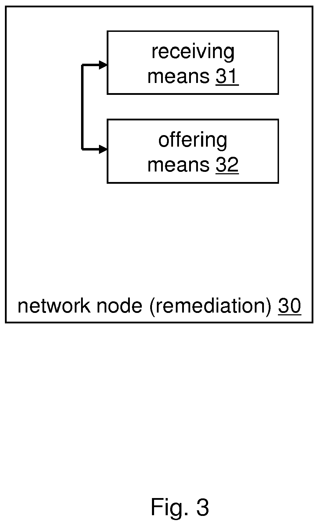

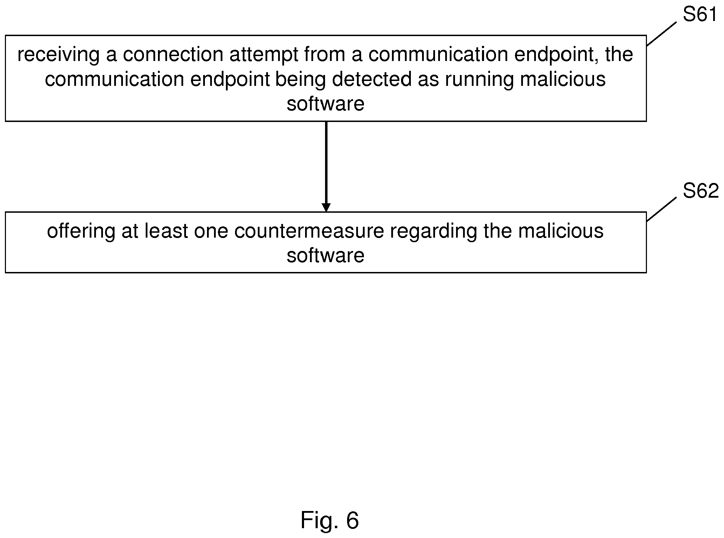

Figure 3 is a block diagram illustrating an apparatus according to example embodiments of the present invention. The apparatus may be a network node 30 such as a malware remediation server, i.e. a structure providing functionality and/or services to remedy malicious software, including receiving means 31 and offering means 32. The receiving means 31 receives a connection attempt from a communication endpoint, wherein the communication endpoint is detected as running malicious software. The offering means 32 offers at least one countermeasure regarding the malicious software. Figure 6 is a schematic diagram of a method according to example embodiments of the present invention. The apparatus according to Figure 3 may perform the method of Figure 6 but is not limited to this method. The method of Figure 6 may be performed by the apparatus of Figure 3 but is not limited to being performed by this apparatus.

As shown in Figure 6, a method according to example embodiments of the present invention includes an operation of receiving (S61) a connection attempt from a communication endpoint with the communication endpoint being detected as running malicious software, and an operation of offering (S62) at least one countermeasure regarding the malicious software.

According to example embodiments of the present invention, the connection attempt is indicative of a certain malicious software running at the communication endpoint, and the countermeasure is tailored to the certain malicious software.

According to a variation of the method shown in Figure 6, example details of the offering operation (S62) are given, which are inherently independent from each other as such.

Such example offering operation (S62) according to example embodiments of the present invention may include an operation of hosting a malicious software support web page including information regarding the malicious software, and/or an operation of providing a malicious software removal software.

According to a further variation of the method shown in Figure 6, example details of the offering operation (S62) are given, which are inherently independent from each other as such.

Such example offering operation (S62) according to example embodiments of the present invention may include an operation of emulating a command and control server.

According to a still further variation of the method shown in Figure 6, example details of the emulating operation are given, which are inherently independent from each other as such.

Such example emulating operation according to example embodiments of the present invention may include an operation of transmitting an instruction to the malicious software running at the communication endpoint.

In example embodiments of the present invention, at least some of the functionalities of the apparatuses shown in Figures 1 and/or 2 and/or 3 may be shared between two physically separate devices forming one operational entity. Therefore, the respective apparatus may be seen to depict the operational entity including one or more physically separate devices for executing at least some of the described processes.

The above-described methods and functions may be implemented by respective functional elements, processors, or the like, as described below.

In the foregoing example description of the network entity, only the units that are relevant for understanding the principles of the invention have been described using functional blocks. The network entity may include further units that are necessary for its respective operation. However, a description of these units is omitted in this specification. The arrangement of the functional blocks of the devices is not construed to limit the invention, and the functions may be performed by one block or further split into sub-blocks.

When in the foregoing description it is stated that the apparatus, i.e. network entity (or some other means) is configured to perform some function, this is to be construed to be equivalent to a description stating that a (i.e. at least one) processor or corresponding circuitry, potentially in cooperation with computer program code stored in the memory of the respective apparatus, is configured to cause the apparatus to perform at least the thus mentioned function. Also, such function is to be construed to be equivalently implementable by specifically configured circuitry or means for performing the respective function (i.e. the expression "unit configured to" is construed to be equivalent to an expression such as "means for").

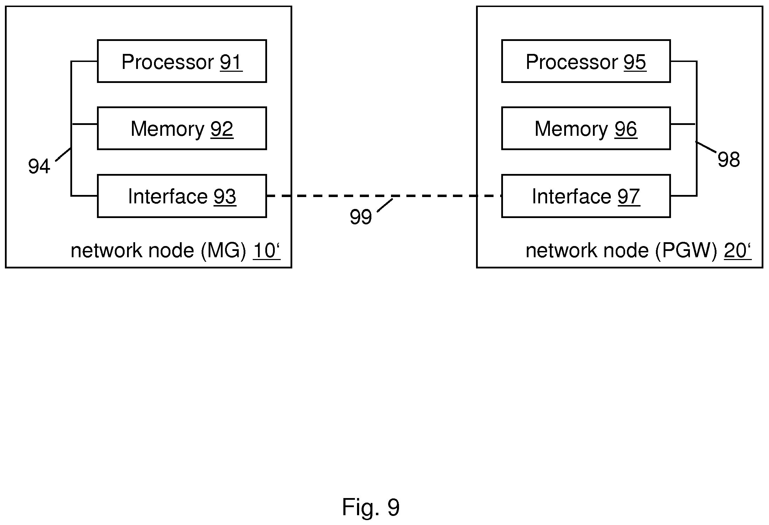

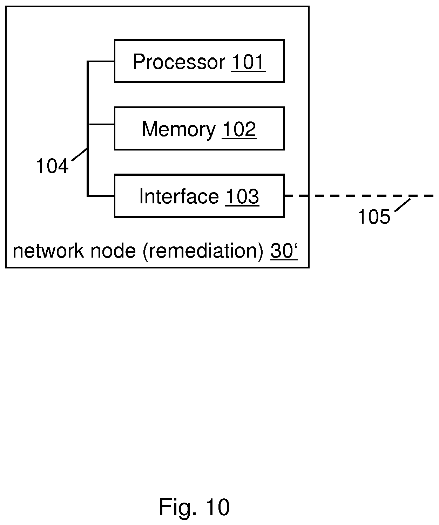

In Figure 9 and 10, an alternative illustration of apparatuses according to example embodiments of the present invention is depicted. As indicated in Figure 9, according to example embodiments of the present invention, the apparatus (network node) 10' (corresponding to the network node 10) includes a processor 91, a memory 92 and an interface 93, which are connected by a bus 94 or the like. Further, according to example embodiments of the present invention, the apparatus (network node) 20' (corresponding to the network node 20) includes a processor 95, a memory 96 and an interface 97, which are connected by a bus 98 or the like, and the apparatuses may be connected via link 99, respectively. Further, as indicated in Figure 10, according to example embodiments of the present invention, the apparatus (network node) 30' (corresponding to the network node 30) includes a processor 101, a memory 102 and an interface 103, which are connected by a bus 104 or the like, with the apparatus being able to be connected with another apparatus via link 105.

The processor 91/95/101 and/or the interface 93/97/103 may also include a modem or the like to facilitate communication over a (hardwire or wireless) link, respectively. The interface 93/97/103 may include a suitable transceiver coupled to one or more antennas or communication means for (hardwire or wireless) communications with the linked or connected device(s), respectively. The interface 93/97/103 is generally configured to communicate with at least one other apparatus, i.e. the interface thereof.

The memory 92/96/103 may store respective programs assumed to include program instructions or computer program code that, when executed by the respective processor, enables the respective electronic device or apparatus to operate in accordance with the example embodiments of the present invention.

In general terms, the respective devices/apparatuses (and/or parts thereof) may represent means for performing respective operations and/or exhibiting respective functionalities, and/or the respective devices (and/or parts thereof) may have functions for performing respective operations and/or exhibiting respective functionalities.

When in the subsequent description it is stated that the processor (or some other means) is configured to perform some function, this is to be construed to be equivalent to a description stating that at least one processor, potentially in cooperation with computer program code stored in the memory of the respective apparatus, is configured to cause the apparatus to perform at least the thus mentioned function. Also, such function is to be construed to be equivalently implementable by specifically configured means for performing the respective function (i.e. the expression "processor configured to [cause the apparatus to] perform xxx-ing" is construed to be equivalent to an expression such as "means for xxx-ing").

According to example embodiments of the present invention, an apparatus representing the network node 10 includes at least one processor 91, at least one memory 92 including computer program code, and at least one interface 93 configured for communication with at least another apparatus. The processor (i.e. the at least one processor 91, with the at least one memory 92 and the computer program code) is configured to perform monitoring network traffic on at least one network interface of the mobile communications network (thus the apparatus including corresponding means for monitoring), to perform detecting a network traffic anomaly caused by the malicious software running on a communication endpoint (thus the apparatus including corresponding means for detecting), to perform identifying the communication endpoint using a device identifier associated with the communication endpoint (thus the apparatus including corresponding means for identifying), and to perform causing manipulation of a traffic handling of the network traffic of the communication endpoint based on the device identifier (thus the apparatus including corresponding means for causing).

Further, according to example embodiments of the present invention, an apparatus representing the network node 20 includes at least one processor 95, at least one memory 96 including computer program code, and at least one interface 97 configured for communication with at least another apparatus. The processor (i.e. the at least one processor 95, with the at least one memory 96 and the computer program code) is configured to perform providing gateway functionality between a first communications network and a second communications network, the first communications network being the mobile communications network (thus the apparatus including corresponding means for providing), to perform deciding to manipulate a traffic handling of network traffic between the first communications network and the second communications network of a communication endpoint in the mobile communications network, the communication endpoint running said malicious software and being identified by a device identifier associated with the communication endpoint (thus the apparatus including corresponding means for deciding), and to perform manipulating the traffic handling of the network traffic between the first communications network and the second communications network based on the device identifier (thus the apparatus including corresponding means for manipulating).

Further, according to example embodiments of the present invention, an apparatus representing the network node 30 includes at least one processor 101, at least one memory 102 including computer program code, and at least one interface 103 configured for communication with at least another apparatus. The processor (i.e. the at least one processor 101, with the at least one memory 102 and the computer program code) is configured to perform receiving a connection attempt from a communication endpoint with the communication endpoint being detected as running malicious software (thus the apparatus including corresponding means for receiving), and to perform offering at least one countermeasure regarding the malicious software (thus the apparatus including corresponding means for offering).

For further details regarding the operability/functionality of the individual apparatuses, reference is made to the above description in connection with any one of Figures 1 to 8, respectively.

For the purpose of the present invention as described herein above, it should be noted that
- method steps likely to be implemented as software code portions and being run using a processor at a network server or network entity (as examples of devices, apparatuses and/or modules thereof, or as examples of entities including apparatuses and/or modules therefore), are software code independent and can be specified using any known or future developed programming language as long as the functionality defined by the method steps is preserved;
- generally, any method step is suitable to be implemented as software or by hardware without changing the idea of the embodiments and its modification in terms of the functionality implemented;
- method steps and/or devices, units or means likely to be implemented as hardware components at the above-defined apparatuses, or any module(s) thereof, (e.g., devices carrying out the functions of the apparatuses according to the embodiments as described above) are hardware independent and can be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components or DSP (Digital Signal Processor) components;

- devices, units or means (e.g. the above-defined network entity or network register, or any one of their respective units/means) can be implemented as individual devices, units or means, but this does not exclude that they are implemented in a distributed fashion throughout the system, as long as the functionality of the device, unit or means is preserved;
- an apparatus like the user equipment and the network entity /network register may be represented by a semiconductor chip, a chipset, or a (hardware) module including such chip or chipset; this, however, does not exclude the possibility that a functionality of an apparatus or module, instead of being hardware implemented, be implemented as software in a (software) module such as a computer program or a computer program product including executable software code portions for execution/being run on a processor;
- a device may be regarded as an apparatus or as an assembly of more than one apparatus, whether functionally in cooperation with each other or functionally independently of each other but in a same device housing, for example.

In general, it is to be noted that respective functional blocks or elements according to above-described aspects can be implemented by any known means, either in hardware and/or software, respectively, if it is only adapted to perform the described functions of the respective parts. The mentioned method steps can be realized in individual functional blocks or by individual devices, or one or more of the method steps can be realized in a single functional block or by a single device.

Generally, any method step is suitable to be implemented as software or by hardware without changing the idea of the present invention. Devices and means can be implemented as individual devices, but this does not exclude that they are implemented in a distributed fashion throughout the system, as long as the functionality of the device is preserved. Such and similar principles are to be considered as known to a skilled person.

Software in the sense of the present description includes software code as such including code means or portions or a computer program or a computer program product for performing the respective functions, as well as software (or a computer program or a computer program product) embodied on a tangible medium such as a computer-readable (storage) medium having stored thereon a respective data structure or code means/portions or embodied in a signal or in a chip, potentially during processing thereof.

The present invention also covers any conceivable combination of method steps and operations described above, and any conceivable combination of nodes, apparatuses, modules or elements described above, as long as the above-described concepts of methodology and structural arrangement are applicable.

In view of the above, there are provided measures for mitigation of malicious software in a mobile communications network. An example measure includes monitoring network traffic on at least one network interface of the mobile communications network, detecting a network traffic anomaly caused by the malicious software running on a communication endpoint, identifying the communication endpoint using a device identifier associated with the communication endpoint, and causing manipulation of a traffic handling of the network traffic of the communication endpoint based on the device identifier.

Even though the invention is described above with reference to the examples according to the accompanying drawings, it is to be understood that the invention is not restricted thereto. The scope of the present invention is defined only by the appended claims.

### List of acronyms and abbreviations

- 3GPP: 3^{rd} Generation Partnership Project
- API: application programming interface
- EPC: evolved packet core
- GGSN: gateway GPRS support node
- GPRS: general packet radio service
- IMEI: International Mobile Station Equipment Identity
- IP: internet protocol
- IT: information technology
- LTE: Long Term Evolution
- MG: Mobile Guard
- MNO: mobile network operator
- NB API: northbound API
- OF: OpenFlow
- OS: open source
- PCRF: policy and charging rules function
- PDP: packet data protocol
- PGW: packet data network gateway, PDN-GW
- PGW-C: PGW application handling 3GPP related LTE control protocols
- PGW-U: PGW part handling user plane traffic
- SDN: Software Defined Networking
- SDNC: SDN controller
- SGSN: serving GPRS support node
- S-GW: serving gateway, SGW
- SMS: short messaging service
- TEID: Tunnel Endpoint Identifier
- UE: user equipment

## Claims

1. A method to mitigate malicious software in a mobile communications network, comprising
monitoring (S41) network traffic on at least one mobile core network interface of the mobile communications network,
detecting (S42) a network traffic anomaly caused by the malicious software running on a communication endpoint,
identifying (S43) the communication endpoint using a device identifier associated with the communication endpoint, and
causing (S44) manipulation of a traffic handling of the network traffic of the communication endpoint based on the device identifier, by transmitting to a packet data network gateway PGW-C handling control protocols an instruction message for causing the PGW-C to instruct a Software Defined Networking Controller SDNC to program and configure a packet data network gateway PGW-U handling user plane traffic to isolate the communication endpoint or block the communication endpoint or redirect the network traffic of the communication endpoint to a predetermined network address.

2. The method according to claim 1, wherein
the predetermined network address identifies a web server hosting a malicious software support web page, and/or
the predetermined network address identifies a web server providing a malicious software removal software.

3. The method according to any of claims 1 to 2, wherein
in relation to the detecting (S42), the method further comprises
determining a type of the malicious software running on the communication endpoint, and
the causing (S44) is based on the type of the malicious software running on the communication endpoint.

4. The method according to any of claims 1 to 3, further comprising
ascertaining a network address in a communications network different from the mobile communications network, the network address being associated with the malicious software running on the communication endpoint, and
transmitting an instruction to suppress any network traffic of any communication endpoint in the mobile communications network to the ascertained network address.

5. An apparatus (10') to mitigate malicious software in a mobile communications network, the apparatus (10') comprising
at least one processor (91),
at least one memory (92) including computer program code, and
at least one interface configured for communication with at least another apparatus (20'),
the at least one processor (91), with the at least one memory (92) and the computer program code, being configured to cause the apparatus (10') to perform:
monitoring (S41) network traffic on at least one mobile core network interface of the mobile communications network,
detecting (S42) a network traffic anomaly caused by the malicious software running on a communication endpoint,
identifying (S43) the communication endpoint using a device identifier associated with the communication endpoint, and
causing (S44) manipulation of a traffic handling of the network traffic of the communication endpoint based on the device identifier, by transmitting to a packet data network gateway PGW-C handling control protocols an instruction message instructing for causing the PGW-C to instruct a Software Defined Networking Controller SDNC to program and configure a packet data network gateway PGW-U handling user plane traffic to isolate the communication endpoint or block the communication endpoint or redirect the network traffic of the communication endpoint to a predetermined network address.

6. The apparatus (10') according to claim 5, wherein
the predetermined network address identifies a web server hosting a malicious software support web page, and/or
the predetermined network address identifies a web server providing a malicious software removal software.

7. The apparatus (10') according to any of claims 5 to 6, wherein the at least one processor (91), with the at least one memory (92) and the computer program code, is configured to cause the apparatus (10') to perform:
determining a type of the malicious software running on the communication endpoint, wherein
the causing (S44) is based on the type of the malicious software running on the communication endpoint.

8. The apparatus (10') according to any of claims 5 to 7, wherein the at least one processor (91), with the at least one memory (92) and the computer program code, is configured to cause the apparatus (10') to perform:
ascertaining a network address in a communications network different from the mobile communications network, the network address being associated with the malicious software running on the communication endpoint, and
transmitting an instruction to suppress any network traffic of any communication endpoint in the mobile communications network to the ascertained network address.

9. A computer program product comprising computer-executable computer program code which, when the program is run on a computer, is configured to cause the computer to carry out the method according to any one of claims 1 to 4.

## Patentansprüche

1. Verfahren zum Eindämmen von bösartiger Software in einem mobilen Kommunikationsnetzwerk, das Folgendes umfasst
Überwachen (S41) von Netzwerkverkehr auf mindestens einer mobilen Kernnetzwerkschnittstelle des mobilen Kommunikationsnetzwerks,
Detektieren (S42) einer Netzwerkverkehrsanomalie, die durch die bösartige Software veranlasst wird, die auf einem Kommunikationsendpunkt läuft,
Identifizieren (S43) des Kommunikationsendpunktes unter Verwendung einer Vorrichtungskennung, die mit dem Kommunikationsendpunkt verknüpft ist, und
Veranlassen (S44) einer Manipulation einer Verkehrshandhabung des Netzwerkverkehrs des Kommunikationsendpunktes auf Basis der Vorrichtungskennung durch Übertragen einer Anweisungsnachricht zum Veranlassen eines Paketdatennetzwerkgateways PGW-C, das Steuerprotokolle handhabt, eine softwaredefinierte Vernetzungssteuerung SDNC zu programmieren und ein Paketdatennetzwerkgateway PGW-U, das Benutzerebenenverkehr handhabt, dazu auszulegen, den Kommunikationsendpunkt zu isolieren oder den Kommunikationsendpunkt zu blockieren oder den Netzwerkverkehr des Kommunikationsendpunktes zu einer vorbestimmten Netzwerkadresse umzuleiten, an das PGW-C.

2. Verfahren nach Anspruch 1, wobei
die vorbestimmte Netzwerkadresse einen Webserver identifiziert, der eine Webseite hostet, die bösartige Software unterstützt, und/oder
die vorbestimmte Netzwerkadresse einen Webserver identifiziert, der eine Software zum Entfernen von bösartiger Software bereitstellt.

3. Verfahren nach einem der Ansprüche 1 bis 2, wobei
das Verfahren mit Bezug auf das Detektieren (S42) ferner Folgendes umfasst
Bestimmen einer Art der bösartigen Software, die auf dem Kommunikationsendpunkt läuft, und
das Veranlassen (S44) auf der Art der bösartigen Software basiert, die auf dem Kommunikationsendpunkt läuft.

4. Verfahren nach einem der Ansprüche 1 bis 3, das ferner Folgendes umfasst
Ermitteln einer Netzwerkadresse in einem Kommunikationsnetzwerk, das sich vom mobilen Kommunikationsnetzwerk unterscheidet, wobei die Netzwerkadresse mit der bösartigen Software verknüpft ist, die auf dem Kommunikationsendpunkt läuft, und
Übertragen einer Anweisung zum Unterdrücken von Netzwerkverkehr eines Kommunikationsendpunktes im mobilen Kommunikationsnetzwerk zur ermittelten Netzwerkadresse.

5. Einrichtung (10') zum Eindämmen von bösartiger Software in einem mobilen Kommunikationsnetzwerk, wobei die Einrichtung (10') Folgendes umfasst
mindestens einen Prozessor (91),
mindestens einen Speicher (92), der einen Computerprogrammcode beinhaltet, und
mindestens eine Schnittstelle, die zur Kommunikation mit mindestens einer anderen Einrichtung (20') ausgelegt ist,
wobei der mindestens eine Prozessor (91) mit dem mindestens einen Speicher (92) und dem Computerprogrammcode dazu ausgelegt ist, die Einrichtung (10') zum Durchführen von Folgendem zu veranlassen:
Überwachen (S41) von Netzwerkverkehr auf mindestens einer mobilen Kernnetzwerkschnittstelle des mobilen Kommunikationsnetzwerks,
Detektieren (S42) einer Netzwerkverkehrsanomalie, die durch die bösartige Software veranlasst wird, die auf einem Kommunikationsendpunkt läuft,
Identifizieren (S43) des Kommunikationsendpunktes unter Verwendung einer Vorrichtungskennung, die mit dem Kommunikationsendpunkt verknüpft ist, und
Veranlassen (S44) einer Manipulation einer Verkehrshandhabung des Netzwerkverkehrs des Kommunikationsendpunktes auf Basis der Vorrichtungskennung durch Übertragen einer Anweisungsnachricht zum Anweisen des Veranlassens eines Paketdatennetzwerkgateways PGW-C, das Steuerprotokolle handhabt, eine softwaredefinierte Vernetzungssteuerung SDNC zu programmieren und ein Paketdatennetzwerkgateway PGW-U, das Benutzerebenenverkehr handhabt, dazu auszulegen, den Kommunikationsendpunkt zu isolieren oder den Kommunikationsendpunkt zu blockieren oder den Netzwerkverkehr des Kommunikationsendpunktes zu einer vorbestimmten Netzwerkadresse umzuleiten, an das PGW-C.

6. Einrichtung (10') nach Anspruch 5, wobei
die vorbestimmte Netzwerkadresse einen Webserver identifiziert, der eine Webseite hostet, die bösartige Software unterstützt, und/oder
die vorbestimmte Netzwerkadresse einen Webserver identifiziert, der eine Software zum Entfernen von bösartiger Software bereitstellt.

7. Einrichtung (10') nach einem der Ansprüche 5 bis 6, wobei der mindestens eine Prozessor (91) mit dem mindestens einen Speicher (92) und dem Computerprogrammcode dazu ausgelegt ist, die Einrichtung (10') zum Durchführen von Folgendem zu veranlassen:
Bestimmen einer Art der bösartigen Software, die auf dem Kommunikationsendpunkt läuft, wobei
das Veranlassen (S44) auf der Art der bösartigen Software basiert, die auf dem Kommunikationsendpunkt läuft.

8. Einrichtung (10') nach einem der Ansprüche 5 bis 7, wobei der mindestens eine Prozessor (91) mit dem mindestens einen Speicher (92) und dem Computerprogrammcode dazu ausgelegt ist, die Einrichtung (10') zum Durchführen von Folgendem zu veranlassen:
Ermitteln einer Netzwerkadresse in einem Kommunikationsnetzwerk, das sich vom mobilen Kommunikationsnetzwerk unterscheidet, wobei die Netzwerkadresse mit der bösartigen Software verknüpft ist, die auf dem Kommunikationsendpunkt läuft, und
Übertragen einer Anweisung zum Unterdrücken von Netzwerkverkehr eines Kommunikationsendpunktes im mobilen Kommunikationsnetzwerk zur ermittelten Netzwerkadresse.

9. Computerprogrammprodukt, das einen computerausführbaren Computerprogrammcode umfasst, der, wenn das Programm auf einem Computer läuft, dazu ausgelegt ist, den Computer zu veranlassen, das Verfahren nach einem der Ansprüche 1 bis 4 umzusetzen.

## Revendications

1. Procédé de lutte contre un logiciel malveillant dans un réseau de communication mobile, comprenant
la surveillance (S41) d'un trafic réseau sur au moins une interface de réseau central mobile du réseau de communication mobile,
la détection (S42) d'une anomalie de trafic réseau causée par le logiciel malveillant s'exécutant sur un point d'extrémité de communication,
l'identification (S43) du point d'extrémité de communication à l'aide d'un identifiant de dispositif associé au point d'extrémité de communication, et
la provocation (S44) d'une manipulation d'une gestion de trafic du trafic réseau du point d'extrémité de communication sur la base de l'identifiant de dispositif, en transmettant un message d'instruction à une passerelle de réseau de données par paquets PGW-C gérant les protocoles de contrôle pour amener la PGW-C à ordonner à un contrôleur de réseautage défini par logiciel SDNC de programmer et de configurer une passerelle de réseau de données par paquets PGW-U gérant un trafic de plan d'utilisateur pour isoler le point d'extrémité de communication, bloquer le point d'extrémité de communication ou rediriger le trafic réseau du point d'extrémité de communication vers une adresse réseau prédéterminée.

2. Procédé selon la revendication 1, dans lequel
l'adresse de réseau prédéterminée identifie un serveur Web hébergeant une page web d'assistance contre les logiciels malveillants, et/ou
l'adresse de réseau prédéterminée identifie un serveur Web fournissant un logiciel de suppression de logiciels malveillants.

3. Procédé selon l'une des revendications 1 et 2, dans lequel
en ce qui concerne la détection (S42), le procédé comprend en outre
la détermination du type du logiciel malveillant s'exécutant sur le point d'extrémité de communication, et
la provocation (S44) de la manipulation est basée sur le type du logiciel malveillant s'exécutant sur le point d'extrémité de communication.

4. Procédé selon l'une des revendications 1 à 3, comprenant en outre
la vérification d'une adresse de réseau dans un réseau de communication différent du réseau de communication mobile, l'adresse de réseau étant associée au logiciel malveillant s'exécutant sur le point d'extrémité de communication, et
la transmission d'une instruction pour supprimer tout trafic réseau de tout point d'extrémité de communication dans le réseau de communication mobile à l'adresse de réseau vérifiée.

5. Appareil (10') de lutte contre un logiciel malveillant dans un réseau de communication mobile, l'appareil (10') comprenant
au moins un processeur (91),
au moins une mémoire (92) comportant un code de programme informatique, et
au moins une interface configurée pour communiquer avec au moins un autre appareil (20')
l'au moins un processeur (91), avec l'au moins une mémoire (92) et le code de programme informatique, étant configuré pour amener l'appareil (10') à réaliser ce qui suit :
surveiller (S41) le trafic réseau sur au moins une interface de réseau central mobile du réseau de communication mobile,
détecter (S42) une anomalie de trafic réseau causée par le logiciel malveillant s'exécutant sur un point d'extrémité de communication,
identifier (S43) le point d'extrémité de communication à l'aide d'un identifiant de dispositif associé au point d'extrémité de communication, et
provoquer (S44) la manipulation d'une gestion de trafic du trafic réseau du point d'extrémité de communication sur la base de l'identifiant de dispositif, en transmettant un message d'instruction à une passerelle de réseau de données par paquets PGW-C gérant les protocoles de contrôle pour amener la PGW-C à ordonner à un contrôleur de réseautage défini par logiciel SDNC de programmer et de configurer une passerelle de réseau de données par paquets PGW-U gérant un trafic de plan d'utilisateur pour isoler le point d'extrémité de communication, bloquer le point d'extrémité de communication ou rediriger le trafic réseau du point d'extrémité de communication vers une adresse réseau prédéterminée.

6. Appareil (10') selon la revendication 5, dans lequel
l'adresse de réseau prédéterminée identifie un serveur Web hébergeant une page web d'assistance contre les logiciels malveillants, et/ou
l'adresse de réseau prédéterminée identifie un serveur Web fournissant un logiciel de suppression de logiciels malveillants.

7. Appareil (10') selon l'une des revendications 5 à 6, dans lequel l'au moins un processeur (91), avec l'au moins une mémoire (92) et le code de programme informatique, est configuré pour amener l'appareil (10') à réaliser ce qui suit :
déterminer le type du logiciel malveillant s'exécutant sur le point d'extrémité de communication, dans lequel
la provocation (S44) de la manipulation est basée sur le type du logiciel malveillant s'exécutant sur le point d'extrémité de communication.

8. Appareil (10') selon l'une des revendications 5 à 7, dans lequel l'au moins un processeur (91), avec l'au moins une mémoire (92) et le code de programme informatique, est configuré pour amener l'appareil (10') à réaliser ce qui suit :
vérifier une adresse de réseau dans un réseau de communication différent du réseau de communication mobile, l'adresse de réseau étant associée au logiciel malveillant s'exécutant sur le point d'extrémité de communication, et
transmettre une instruction pour supprimer tout trafic réseau de tout point d'extrémité de communication dans le réseau de communication mobile à l'adresse de réseau vérifiée.

9. Produit de programme informatique comprenant un code de programme informatique exécutable par ordinateur qui, lorsque le programme est exécuté sur un ordinateur, est configuré pour amener l'ordinateur à mettre en œuvre le procédé selon l'une des revendications 1 à 4.
